# EUROPEAN PATENT APPLICATION

(11) **EP 2 360 846 A1**
(43) Date of publication of application: **24.08.2011**
(21) Application number: 10835268.3
(22) Date of filing: 22.06.2010
(51) Int. Cl.: H04B 1/74

(54) **RADIO LINK BACKUP SYSTEM**

(71) Applicant: Hunan Sany Intelligent Control Equipment Co., Ltd, Hunan 410100 (CN); Sany Heavy Industry Co., Ltd., Changsha Hunan 410100 (CN)
(72) Inventor: ZHOU, Xiang, Hunan 410100 (CN); GUO, Li, Hunan 410100 (CN); YAO, Gaoshang, Hunan 410100 (CN); MO, Xiaoqi, Hunan 410100 (CN); YI, Xiaogang, Hunan 410100 (CN)
(74) Representative: Kopf, Korbinian Paul
(86) International application number: PCT/CN2010/074201
(87) International publication number: WO 2011/079584

(57) **Abstract**

A wireless link backup system, including a first device and a second device, wherein the first device comprises a first controller and at least two first wireless transceivers; the at least two first wireless transceivers have the same working parameters; and the first controller is adapted to control such that only one of the first wireless transceivers is working at a time; the second device comprises a second controller and at least two second wireless transceivers; the at least two second wireless transceivers have the same working parameters; and the second controller is adapted to control such that only one of the second wireless transceivers is working at a time; and the working parameter of the first wireless transceiver match the working parameter of the second wireless transceiver, so that wireless connection between the first wireless transceiver and the second wireless transceiver can be established.

## Description

### Cross-Reference To Related Application

This application claims the benefit of Chinese Patent Application No. 200910266115.4, titled "WIRELESS LINK BACKUP SYSTEM", filed on December 30, 2009 with State Intellectual Property Office, which is hereby incorporated by reference in its entirety.

### Field of the Invention

The present disclosure relates to the field of communication technology, and in particular to a wireless link backup method and a system thereof.

### Background of the Invention

In the applications of short-range point-to-point wireless communication, particularly, remote control, data transmission between two communication parties is realized based on matching wireless transceivers. For convenience of representation, the communication parties are referred to as a first device and a second device.

Typical application modes of two communication parties include:

1. The first device is equipped with a wireless transmitter, specifically for sending data; and the second device is equipped with a wireless receiver, specifically for receiving data, Thus, one-way data transmission from the first device to the second device is realized.

2. Both the first device and the second device are equipped with a wireless transmitter and a wireless receiver, thereby realizing two-way data transmission between the first device and the second device.

3. Both the first device and the second device are equipped with a wireless transceiver, which can transmit as well as receive, thus, two-way data transmission between the first device and the second device is realized based on the wireless transceivers,

Under any of the modes above, if any one of the wireless devices (transmitter, receiver, or transceiver) is damaged or malfunctions, predetermined wireless communication needs will not be met,

Therefore, it is a technical problem for the skilled in the art to solve on how to provide a wireless link backup method to improve wireless communication reliability.

### Summary of the Invention

In view of this, the present disclosure provides a wireless link backup system, to improve wireless communication reliability.

To solve the problem above, the present disclosure provides the following technical solution,

A wireless link backup system, wherein the wireless link backup system includes a first device and a second device;

the first device includes a first controller and at least two first wireless transceivers; the at least two first wireless transceivers have the same working parameters; and the first controller is adapted to control such that only one of the first wireless transceivers is working at a time;

the second device includes a second controller and at least two second wireless transceivers; the at least two second wireless transceivers have the same working parameters; and the second controller is adapted to control such that only one of the second wireless transceivers is working at a time; and

the working parameter of the first wireless transceiver match the working parameter of the second wireless transceiver, so that wireless connection between the first wireless transceiver and the second wireless transceiver can be established,

Preferably, the first controller is adapted to control to switch all the first wireless transceivers such they are working alternately; and

the second controller is adapted to control to switch all the second wireless transceivers such that they are working alternately,

Preferably, the first device includes a first timer connected to the first controller, and the first timer is adapted to set a first time period which is the length of time that each of the first wireless transceivers is working continuously; and

the second device includes a second timer connected to the second controller, and the second timer is adapted to set a second time period which is the length of time that each of the second wireless transceivers is working continuously.

Preferably, the first wireless transceiver and the second wireless transceiver send wireless connection establishment information to the first controller and the second controller respectively, when the wireless connection therebetween is established; and

on reception of the wireless connection establishment information, the first controller and the second controller stop the alternating switching of their respective wireless transceivers.

Preferably, the first time period is unequal to the second time period,

Preferably, the first time period is a multiple of the second time period, or the second time period is a multiple of the first time period.

Preferably, the first time period equals to the product of the second time period and the number of the second wireless transceivers; or the second time period equals to the product of the first time period and the number of the first wireless transceivers.

Preferably, if the first wireless transceiver or the second wireless transceiver is working and acts as an initiating party, the first wireless transceiver or the second wireless transceiver sends connection information and is responsible for monitoring response information before establishing wireless connection with the second wireless transceiver or the first wireless transceiver;

once the first wireless transceiver or the second wireless transceiver receives the response information, it is determined that wireless connection between the first wireless transceiver and the second wireless transceiver has been established;

when the wireless connection is established, the first wireless transceiver and the second wireless transceiver send wireless connection establishment information to the first controller and the second controller respectively;

on reception of the wireless connection establishment information, the first controller and the second controller stop the alternating switching control on the first wireless transceivers and the second wireless transceivers respectively; and

as a responsive party, the working second wireless transceiver or the first wireless transceiver sends response information to the first wireless transceiver or the second wireless transceiver on monitoring connection information, before establishing the wireless connection with the first wireless transceiver or the second wireless transceiver,

Preferably, the first device includes a third timer connected to the first controller, and the second device includes a fourth timer connected to the second controller; and

when the first wireless transceiver of the first device or the second wireless transceiver of the second device is the initiating party, if it does not receive the response information within a third time period predetermined by the third timer or a fourth time period predetermined by the fourth timer, the first wireless transceiver or the second wireless transceiver sends connection lost information to the first controller or the second controller.

Preferably, on reception of the connection lost information, the first controller or the second controller starts up the alternating switching control on all the first wireless transceivers or the second wireless transceivers.

Based on the description above of the solution, it can be seen that the present disclosure has the following advantages:

The wireless link backup system according to the embodiments of the present disclosure includes a first device with at least two first wireless transceivers and a second device with at least two second wireless transceivers, and, at a certain time, under the control of their respective controllers, the first wireless transceiver and the second wireless transceiver can be working, and working parameter of the first wireless transceiver match working parameter of the second wireless transceiver, so that wireless connection can be established between the first wireless transceiver and the second wireless transceiver, thereby realizing the establishment of a wireless communication link, and realizing data communication.

Each of the first wireless transceivers can establish wireless connection with any one of the second wireless transceivers, and similarly, each of the second wireless transceivers can establish wireless connection with any one of the first wireless transceivers. Therefore, the system according to the embodiments of the present disclosure can improve communication reliability of wireless remote control devices effectively.

Although each of the devices includes at least two wireless transceivers, only one of the wireless transceivers of each device is powered on at a time. Therefore, the system of the present disclosure can effectively save electricity.

### Brief Description of the Drawings

To describe the embodiments of the present disclosure or the technical solution in the prior art more clearly, drawings used in the descriptions of the embodiments or the prior art are described briefly hereinafter, Apparently, the drawings described below are merely some of the embodiments of the present disclosure, and other drawings may be obtained by the skilled in the art based on these drawings without any inventive efforts.

FIG. 1 is a structural diagram of a first embodiment of the wireless link backup system according to the present disclosure; and

FIG. 2 is a structural diagram of a second embodiment of the wireless link backup system according to the present disclosure.

### Detailed Description of the Invention

The present disclosure provides a wireless link backup system, to improve wireless communication reliability,

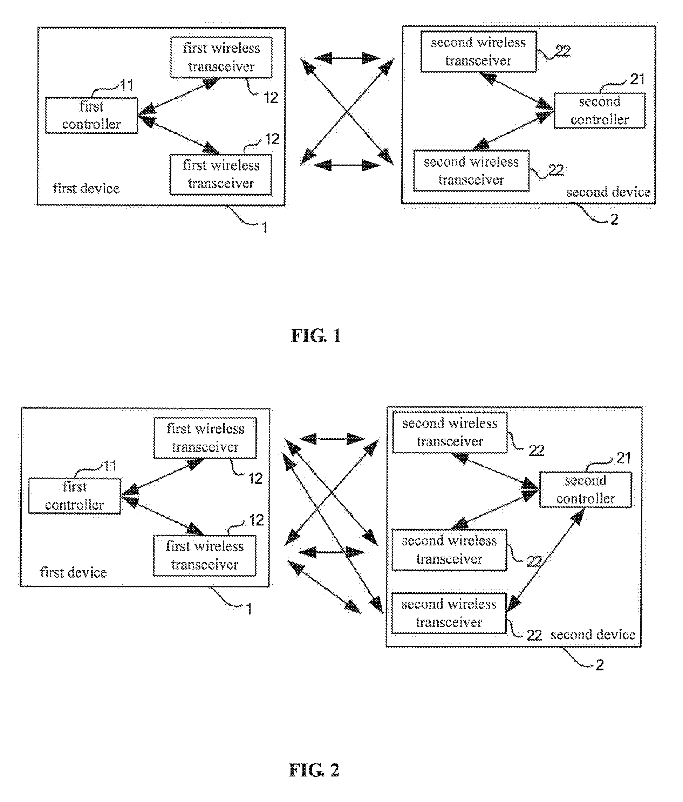

Now refer to FIG. 1, a structural diagram of a first embodiment of the wireless link backup system according to the present disclosure.

The wireless link backup system according to the first embodiment of the present disclosure includes a first device 1 and a second device 2.

The first device 1 includes a first controller 11 and two first wireless transceivers 12.

The two first wireless transceivers 12 have the same working parameters,

The first controller 11 is adapted to control such that only one of the first wireless transceivers 12 is working at a certain time.

The first controller 11 can control to switch all the first wireless transceivers 12 such that they are working alternately.

The second device 2 includes a second controller 21 and two second wireless transceivers 22.

The two second wireless transceivers 22 have the same working parameters.

The second controller 21 is adapted to control such that only one of the second wireless transceivers 22 is working at a certain time.

The second controller 21 can control to switch all the second wireless transceivers 22 such that they are working alternately.

Working parameters of the first wireless transceiver 12 match working parameters of the second wireless transceiver 22, so that wireless connection between the first wireless transceiver 12 and the second wireless transceiver 22 can be established.

For stability of the wireless connection and success of data transmission, when wireless connection between a certain first wireless transceiver 12 and a certain second wireless transceiver 22 is established, the first wireless transceiver 12 sends wireless connection establishment information to the first controller 11, and the second wireless transceiver 22 sends wireless connection establishment information to the second controller 21.

On reception of the wireless connection establishment information, the first controller 11 and the second controller 21 stop the alternating switching control on their wireless transceivers 12 and 22, respectively,

For the wireless transceiver 12 of the first device 1 and the wireless transceiver 22 of the second device 2 to establish connection when they are both powered oil, the wireless transceivers 12 and 22 shall have corresponding connection establishing mechanism and connection preserving mechanism. Any one of the first device 1 and the second device 2 can be the initiating party, the other one being the responsive party, to realize the wireless connection therebetween.

If the first wireless transceiver 12 is working and acts as the initiating party, the first wireless transceiver 12 sends connection information and is responsible for monitoring response information, before establishing wireless connection with the second wireless transceiver 22,

Once the first wireless transceiver 12 receives the response information, it can be determined that wireless connection between the first wireless transceiver 12 and the second wireless transceiver 22 has been established.

If the second wireless transceiver 22 is working and acts as the initiating party, the second wireless transceiver 22 sends connection information and is responsible for monitoring response information, before establishing wireless connection with the first wireless transceiver 12.

Once the second wireless transceiver 22 receives the response information, it can be determined that wireless connection between the first wireless transceiver 12 and the second wireless transceiver 22 has been established.

If the first wireless transceiver 12 or the second wireless transceiver 22 can not receive the response information within a period of time, it can be determined that the connection is lost.

The first device 1 may further include a third timer 14 connected to the first controller 11, and the second device 2 includes a fourth timer 24 connected to the second controller 21.

When the first wireless transceiver 12 of the first device 1 is the initiating party, if it does not receive the response information within a third time period predetermined by the third timer 14, the first wireless transceiver 12 sends connection lost information to the first controller 11.

When the second wireless transceiver 22 of the second device 2 is the initiating party, if it does not receive the response information within a fourth time period predetermined by the fourth timer 24, the second wireless transceiver 22 sends connection lost information to the second controller 21.

On reception of the connection lost information, the first controller 11 or the second controller 21 starts up the alternating switching control on all the first wireless transceivers 12 or the second wireless transceivers 22.

Similarly, for stability of wireless connection and success of data transmission, the first wireless transceiver 12 and the second wireless transceiver 22 may send wireless connection establishment information to the first controller 11 and the second controller 21 respectively, when the wireless connection therebetween is established.

On reception of the wireless connection establishment information sent from the first wireless transceiver 12, the first controller 11 stops the alternating switching of the first wireless transceivers 12.

On reception of the wireless connection establishment information sent from the second wireless transceiver 22, the second controller 21 stops the alternating switching of the second wireless transceivers 22.

The wireless link backup system according to the first embodiment of the present disclosure includes a first device 1 with two first wireless transceivers 12 and a second device 2 with two second wireless transceivers 22; and, at a certain time, under the control of their respective controllers 11 and 21, the first wireless transceiver 12 and the second wireless transceiver 22 can be working, and working parameters of the first wireless transceiver 12 match working parameters of the second wireless transceiver 22, so that wireless connection can be established between the first wireless transceiver 12 and the second wireless transceiver 22, thereby realizing the establishment of a wireless communication link, guaranteeing data communication, and realizing redundant backup of the wireless link.

Each of the first wireless transceivers 12 can establish wireless connection with any one of the second wireless transceivers 22, and similarly, each of the second wireless transceivers 22 can establish wireless connection with any one of the first wireless transceivers 12. Therefore, the system according to the embodiment of the present disclosure can improve communication reliability of wireless remote control devices effectively.

Although each of the devices 1 and 2 includes two wireless transceivers 12 or 22, only one of the wireless transceivers 12 or 22 of each device is powered on at a time, thus, the system of the present disclosure can save electricity effectively.

The length of time that each of the first wireless transceivers 12 is working continuously may equal to the length of time that each of the second wireless transceivers 22 is working continuously.

The first device 1 may further include a first timer 13 connected to the first controller 11. The first timer 13 is adapted to preset a first time period to.

The first time period t1 is the length of time that each of the first wireless transceivers 12 is working continuously.

The second device 2 may also include a second timer 23 connected to the second controller 21. The second timer 23 is adapted to preset a second time period t2.

The second time period t2 is the length of time that each of the second wireless transceivers 22 is working continuously.

To make sure that wireless connection between the first device 1 and the second device 2 can be established between any matching pair of first wireless transceivers 12 and second wireless transceivers 22, the first time period t1 and the second time period t2 shall be set unequal,

The first time period t1 may be a multiple of the second time period t2, and the second time period t2 may be a multiple of the first time period t1, with the multiplier being equal to the number of the counterpart wireless transceivers 12 or 22.

As the number of the wireless transceivers 12 or 22 of each of the devices 1 and 2 in FIG. 1 is two, we may set t1=2*t2 or t2=2*t1.

Thus, it is possible for each of the first wireless transceivers 12 of the first device 1 to be powered on and working at the same time with any one of the second wireless transceivers 22 of the second device 2, and further to establish wireless connection therebetween.

Dynamic switching and searching may be applied to the system according to the embodiment of the present disclosure, to determine the wireless connection between the first device 1 and the second device 2, thereby realizing optimized connection quality.

The first device 1 may include two or more of the first wireless transceivers 12, and the second device 2 may also include two or more of the second wireless transceivers 22.

Now refer to FIG. 2, a structural diagram of a second embodiment of the wireless link backup system according to the present disclosure.

The difference between the wireless link backup system according to the second embodiment of the present disclosure and that according to the first embodiment lies in that, the first device 1 includes two first wireless transceivers 12, and the second device 2 includes three second wireless transceivers 22.

As the first device 1 of the wireless link backup system according to the second embodiment of the present disclosure includes two first wireless transceivers 12 and the second device 2 includes three second wireless transceivers 22, we may set t1=3*t2 or t2=2*t1.

Thus, it is possible for each of the first wireless transceivers 12 of the first device 1 to be powered on and working at the same time with any one of the second wireless transceivers 22 of the second device 2, and further to establish wireless connection therebetween.

Based on the description of the disclosed embodiments, the skilled in the art can implement or use the present disclosure. Many modifications to the embodiments would be obvious to the skilled in the art, and the general principle defined herein can be implemented in other embodiments without deviating from the scope of the present disclosure. Therefore, the present disclosure shall not be limited to the embodiments described herein, but has the widest scope that is consistent with the principle and novel characteristics disclosed herein,

Preferable embodiments of the present disclosure are described above, which are not intended to limit the scope of the present disclosure. Any modifications, equivalents and improvement made within the principle of the present disclosure shall be included in the scope of protection of the present disclosure.

## Claims

1. A wireless link backup system, wherein the wireless link backup system comprises a first device and a second device;
the first device comprises a first controller and at least two first wireless transceivers; the at least two first wireless transceivers have the same working parameters; and the first controller is adapted to control such that only one of the first wireless transceivers is working at a time;
the second device comprises a second controller and at least two second wireless transceivers; the at least two second wireless transceivers have the same working parameters; and the second controller is adapted to control such that only one of the second wireless transceivers is working at a time; and
the working parameter of the first wireless transceiver match the working parameter of the second wireless transceiver, so that wireless connection between the first wireless transceiver and the second wireless transceiver can be established.

2. The system according to claim 1, wherein the first controller is adapted to control to switch all the first wireless transceivers such they are working alternately; and
the second controller is adapted to control to switch all the second wireless transceivers such that they are working alternately.

3. The system according to claim 2, wherein the first device comprises a first timer connected to the first controller, and the first timer is adapted to set a first time period which is the length of time that each of the first wireless transceivers is working continuously; and
the second device comprises a second timer connected to the second controller, and the second timer is adapted to set a second time period which is the length of time that each of the second wireless transceivers is working continuously.

4. The system according to claim 3, wherein,
the first wireless transceiver and the second wireless transceiver send wireless connection establishment information to the first controller and the second controller respectively, when the wireless connection there between is established; and
on reception of the wireless connection establishment information, the first controller and the second controller stop the alternating switching of their respective wireless transceivers,

5. The system according to claim 3, wherein the first time period is unequal to the second time period,

6. The system according to claim 5, wherein the first time period is a multiple of the second time period, or the second time period is a multiple of the first time period.

7. The system according to claim 5, wherein the first time period equals to the product of the second time period and the number of the second wireless transceivers; or the second time period equals to the product of the first time period and the number of the first wireless transceivers.

8. The system according to any one of claims 5 to 7, wherein,
if the first wireless transceiver or the second wireless transceiver is working and acts as an initiating party, the first wireless transceiver or the second wireless transceiver sends connection information and is responsible for monitoring response information before establishing wireless connection with the second wireless transceiver or the first wireless transceiver;
once the first wireless transceiver or the second wireless transceiver receives the response information, it is determined that wireless connection between the first wireless transceiver and the second wireless transceiver has been established;
when the wireless connection is established, the first wireless transceiver and the second wireless transceiver send wireless connection establishment information to the first controller and the second controller respectively;
on reception of the wireless connection establishment information, the first controller and the second controller stop the alternating switching control on the first wireless transceivers and the second wireless transceivers respectively; and
as a responsive party, the working second wireless transceiver or the first wireless transceiver sends response information to the first wireless transceiver or the second wireless transceiver on monitoring connection information, before establishing the wireless connection with the first wireless transceiver or the second wireless transceiver.

9. The system according to any one of claims 3 to 7, wherein,
the first device comprises a third timer connected to the first controller, and the second device comprises a fourth timer connected to the second controller; and
when the first wireless transceiver of the first device or the second wireless transceiver of the second device is the initiating party, if it does not receive the response information within a third time period predetermined by the third timer or a fourth time period predetermined by the fourth timer, the first wireless transceiver or the second wireless transceiver sends connection lost information to the first controller or the second controller.

10. The system according to claim 9, wherein on reception of the connection lost information, the first controller or the second controller starts up the alternating switching control on all the first wireless transceivers or the second wireless transceivers.
